# EUROPEAN PATENT APPLICATION

(11) **EP 2 802 130 A1**
(43) Date of publication of application: **12.11.2014**
(21) Application number: 13166870.9
(22) Date of filing: 07.05.2013
(51) Int. Cl.: H04M 1/247, H04M 1/725

(54) **Sensor device for an alerting system**

(71) Applicant: Bellman & Symfon Europe AB, 421 32 V. Frölunda (SE)
(72) Inventor: Jungvid, Peter Gustaf, Göteborg (SE)
(74) Representative: Müller Verweyen

(57) **Abstract**

A sensor device (11) for an alerting system comprises a casing (15) and a sensing element (14) adapted to detect an alerting event, wherein said sensor device (11) is adapted to output an alert signal in response to said sensing element (14) detecting an alerting event. The sensing element is a photosensitive element (14) adapted to detect, when said sensor device (11) is positioned in a sensitive relationship to a display of a mobile communication device (17), an illumination of the display of said mobile communication device (17).

## Description

The invention relates to a sensor device for an alerting system, comprising a casing and a sensing element adapted to detect an alerting event, wherein said sensor device is adapted to output an alert signal in response to said sensing element detecting an alerting event.

Alerting systems for deaf or hard of hearing people have been on the market for a long time. See for example the technical manual of the applicant "Technical Solutions", English 1.4, 2009, 204 pages, to be downloaded under www.bellman.com. Such alerting systems comprise for example transmitter for detecting events like incoming calls on wired telephones, smoke alarm, door bell ringing or baby cry. In case a transmitter detects such an event, it sends an alerting signal to one or more receivers, like wrist receiver, pager receiver, alarm clock, portable receiver, flash receiver, portable flash receiver. The receiver alerts a user either directly, or by activating a separate alerting device, for example a bed shaker.

An alerting arrangement for detecting incoming calls or messages of a mobile phone is known from "LightOn" User Manual, Dreamzon Ltd., 2010, 16 pages, to be downloaded under www.dreamzon.com. The alerting arrangement is battery powered and comprises a cradle, a vibration sensor and a flashing LED light. When a mobile phone is placed in the cradle, text messages or phone calls are detected by detecting the vibration of the mobile phone with the vibration sensor, which triggers the flashing LED light. The alerting arrangement comprises an output port which may be connected via a cable to a transmitter of an alerting system of the kind described above, or for example to a vibrating pillow. However, this product has a high false alarm rate and a low detection reliability (probability of detecting true phone calls or text messages). The high false alarm rate is caused by vibrations in the environment which are transmitted to the vibration sensor via the casing of the unit and/or via the mobile phone. The low detection reliability is caused mostly because the detection process depends on the specific design of the mobile phone and the specific contact between the mobile phone and the cradle, which may strongly vary between different mobile phones. In particular, the contact between the mobile phone and the cradle may be insufficient for certain mobile phones.

The problem underlying the present invention is to provide a sensor device which is adapted to detect events on an electronic device with a low false alarm rate and a high detection reliability essentially independent of the type or design of the electronic device.

The invention solves this problem with the features of the independent claims. By using a photosensitive element adapted to detect an illumination of the light emitting alarm or notification element of the electronic device, in other words by using an optical sensor, neither vibrations in the environment nor the design of the electronic device or the specific contact between the electronic device and the sensor device do have any influence on the detection process itself. In this manner, both the false alarm rate can be strongly reduced and the detection reliability or functionality of the sensor device can be strongly enhanced.

The electronic device may for example be a mobile phone, a smart device like a smart phone, a tablet, a mobile electronic device or an electronic communication device. Other electronic devices are possible, for example a computer, in particular a portable computer, a notebook, an electronic alarm device. The electronic device may be a display device or a screen device where the display or screen is illuminated upon certain events. In other words, the light emitting alarm or notification element of the electronic device may be a display or a screen. Other light emitting alarm or notification elements are possible. Triggering events which cause illumination of the light emitting alarm or notification element of the electronic device may for example be incoming phone calls, incoming text messages (SMS), incoming voice over IP events, incoming electronic mails, or electronic calendar notifications. Preferably, the user can, through settings in the electronic device, configure which kind of events shall cause the light emitting alarm or notification element to be illuminated or lit and, thereby, to cause a sensor signal.

Preferably the sensor device is designed to be self-raising when deflected from a vertical orientation. In this manner, the photosensitive element, being preferably arranged on the bottom side, is not exposed to light from the environment when the sensor device stands on a surface. This helps to prevent false alarms caused by the photosensitive element being exposed to light from the environment. Furthermore, in embodiments where the photosensitive element draws current, for example in the case of a phototransistor, undesired current consumption by the photosensitive element can be reduced.

In a preferred embodiment an alerting arrangement is provided comprising an inventive sensor device and a host device connected to receive an alerting signal from the sensor device, whereupon the host device causes an alerting measure for alerting a user in particular if the sensor signal fulfils an alerting condition.

In order to evaluate whether the sensor signal fulfils an alerting condition, the alerting arrangement preferably comprises a threshold means which causes an alerting measure only if a signal from the photosensitive element indicates an alert condition for a predetermined period of time which is preferably at least one second, more preferably at least 1.5 seconds and still more preferably at least 2 seconds. The threshold means ensures that only a relatively long illumination of the light emitting alarm or notification element caused by a triggering event causes alerting of the user, and not a short illumination caused for other reasons. The threshold means is preferably arranged in said host unit and can be realized in form of a hardware circuit or as software in a digital signal processor comprised in the host unit.

Any signal processing of the signal from the sensor device is preferably performed within the host device. As a result, the sensor device contains the photosensitive element and wiring for transmitting the signal from the photosensitive element to the host device, but preferably no other electronic processing circuitry is needed in the sensor device. Therefore, the sensor device can be light, compact and does not need a separate power supply, like batteries.

In alternative embodiments, the sensor device can be integrated into the host device or vice versa, in order to provide an integrated alerting unit. For example, a small battery, a threshold circuit, a high intensive warning LED and/or a radio transmitter may be provided in the sensor which may thus form an autonomous alerting unit.

The alerting measure caused by the host device may be transmitting an alerting signal to another alerting device or receiver, like wrist receiver, pager receiver, alarm clock, portable receiver, flash receiver or portable flash receiver, preferably through wireless or radio communication. Alternatively or in addition, the host device may comprise integrated alerting means for directly notifying the user. In both alternatives and generally, notifying the user is done either by tactile (vibration), audio and/or visual alerting.

A preferred application of the invention relates to an alerting system for deaf or hard of hearing people. However, other applications are possible, for example an alerting system in a noisy environment, like an industrial area, or in a large area where the electronic device is stationary. A further application may be an alerting system in a home environment where it can be useful to have distant or visual alerting.

In the following the invention shall be illustrated on the basis of preferred embodiments with reference to the accompanying drawings, wherein:
- Fig. 1: shows an alerting system in an embodiment of the invention;
- Figs. 2, 3: show the sensor device of Fig. 1 in a view from the bottom and the top, respectively;
- Figs. 4, 5: show the sensor device of Fig. 1 in opposite views from the side;
- Figs. 6 to 8: show perspective views of the sensor devices in alternative embodiments of the invention; and
- Figs. 9, 10: show alerting systems in an alternative embodiments of the invention.

The alerting system 10 comprises an alerting arrangement with a sensor device 11 and a host unit 12 connectable to the sensor element 11 in particular via a cable 13 or alternatively by a wireless/radio communication link. The sensor device 11 comprises a casing 15 and a photosensitive element 14, in particular a photodiode or a phototransistor, which is arranged in the casing 15. The casing 15 allows light to fall from outside the casing 15 on the photosensitive element 14 to generate an electrical signal (photocurrent) in the photosensitive element 14. In this respect, the casing 15 may comprise an opening behind which the photosensitive element 14 is arranged, or the casing 15 may be made at least partially of a transparent material.

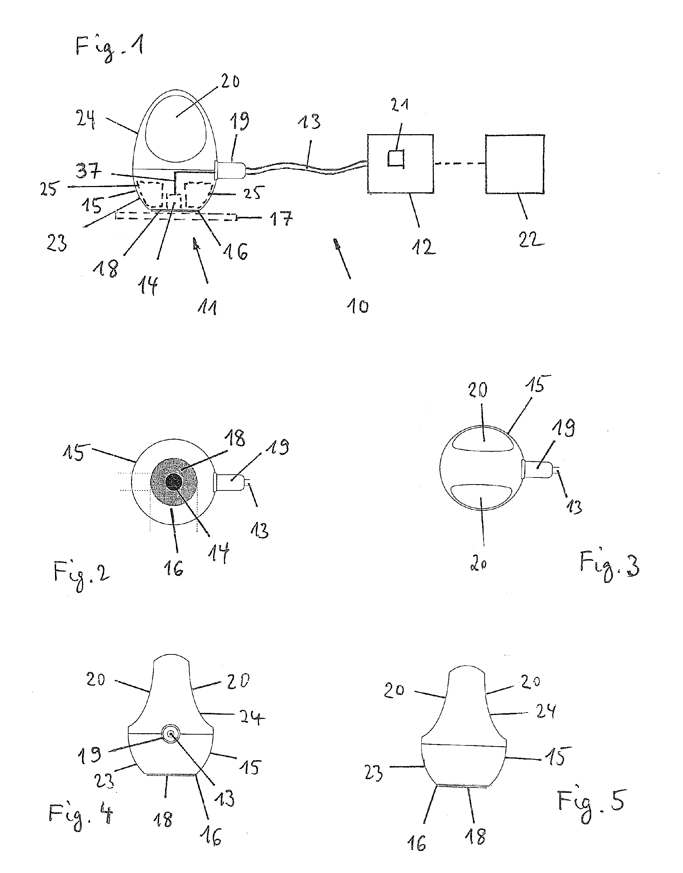

The casing 15 preferably comprises a planar base surface 16 which is designed to be put over, i.e. to be put in a measuring relationship to, and preferably brought into contact with, the display of an electronic device 17, for example a smart device, a smart phone or a mobile phone, which is only schematically indicated in Figure 1. The photosensitive element 14 is arranged in a measuring relationship to the base surface 16 of the sensor device 11 such that, when the base surface is placed over the display of the electronic device 17, light from the display can fall on the photosensitive element 14. The electrical signal generated by the photosensitive element 14 from the light falling on its sensitive area is transmitted via a signal line 37 through the cable 13 to the host device 12.

Upon receiving the electrical signal from the sensor device 11, the host device 12 causes an alerting measure for alerting a user in particular if the sensor signal fulfils an alerting condition. In order to evaluate the sensor signal fulfils an alerting condition, the alerting arrangement preferably comprises a threshold means 21 which causes an alerting measure only if a signal from the photosensitive element 14 indicates an alert condition for a predetermined period of time which is preferably at least one second, more preferably at least 1.5 seconds and still more preferably at least 2 seconds. The threshold means 21 ensures that only a relatively long illumination of the display caused by a triggering event, like an incoming phone call or text message, causes alerting of the user, and not a short illumination caused for other reasons. The threshold means 21 is preferably arranged in the host unit 21 and can be realized in form of a hardware circuit or as software in a digital signal processor comprised in the host unit 21.

Any signal processing of the signal from the sensor device 11 is preferably performed within the host device 21. As a result, the sensor device 11 contains the photosensitive element 14 and wiring 37 for transmitting the signal from the photosensitive element 14 to the host device 12, but preferably no other electronic processing circuitry is needed in the sensor device 11. Therefore, the sensor device 11 can be light, compact and does not need a separate power supply, like batteries. The host device 12 may for example be battery powered or mains powered through an external supply cable.

The alerting measure caused by the host device 12 may be transmitting an alerting signal to another alerting device 22 or receiver, like wrist receiver, pager receiver, alarm clock, portable receiver, flash receiver or portable flash receiver, preferably through wireless or radio communication. Alternatively or in addition, the host device 12 may comprise integrated alerting means for directly notifying the user. In both alternatives and generally, notifying the user is done either by tactile (vibration), audio and/or visual alerting.

In the preferred embodiment shown in Figures 1 to 5, the sensor device 11 stands on the display of the electronic device 17 without being further fastened to it. In order to maintain the sensor device 11 in a sensitive relationship relative to the display of the electronic device 17, and also to protect it against scratching, preferably a high-friction soft or elastic member 18 or foot element, for example made of rubber, is provided at the bottom surface 16 of the casing 15. The elastic member 18 is preferably ring shaped such that light can fall through the central opening onto the photosensitive element 14.

In the preferred embodiment of Figures 1 to 5 the sensor device 15 is self-raising, i.e., if it is deflected from the default vertical operation position shown in Figure 1, gravity acts to put it back into this default vertical operation position. Towards this feature, the lower part 23 of the casing 15 of the sensor device 11 preferably has a round side surface in a side view, as can bee seen in Figures 1, 4 and 5. Furthermore, the centre of gravity of the sensor device 11 preferably lies significantly, i.e. at least 10%, more preferably at lest 20%, below the half height of the sensor device 11. This may preferably achieved by means of a weight 25, for example of metal, positioned in a lower area or lower half of the sensor device 11 within the casing 15. The weight 25 is preferably ring shaped, where the photosensitive element 14 may advantageously be arranged in the ring opening of the weight 25, see Figure 1. The casing 15 of the sensor device 11 may be overall egg shaped.

The sensor device 16 may comprise a cable grommet 19 and a handling means 20, for example in particular in the form of recessed grips. The casing 15 may be two part for easy assembly, see Figures 1, 4 and 5, where the separation between the casing parts preferably lies in the plane of a through-opening in the casing 15 for the signal line 37, cable 13 and/or grommet 19.

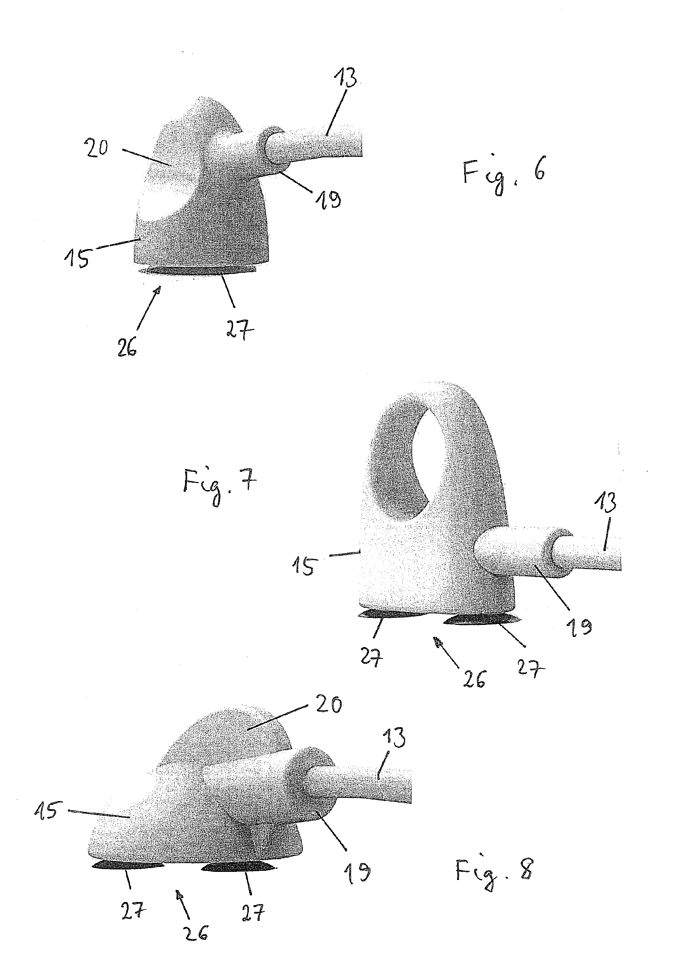

In other embodiments like those shown in Figures 6 to 8 the positioning means comprises a fastening means 26 for fastening the sensor device 11 on the display of the electronic device 17. Here, the fastening means 26 preferably comprises at least one suction means, in particular one or more suction cups 27. In the embodiment of Figure 6, the fastening means 26 comprises one suction cup 27 which is advantageously partly transparent in order to allow light to fall on the photosensitive element 14 positioned behind the suction cup 27, while a part of the suction cup is preferably opaque to prevent ambient light to enter the photosensitive element 14. In the embodiment of Figure 7, the fastening means 26 comprises two suction cups 27 which do not have to be transparent if the photosensitive element 14 is preferably positioned between the suction cups 27. Here, the handling means 20 is for example ring shaped. In the embodiment of Figure 8, the fastening means 26 comprises three suction cups 27 which do not have to be transparent if the photosensitive element 14 is preferably positioned between the suction cups 27. Here, the handling means 20 is for example plate shaped.

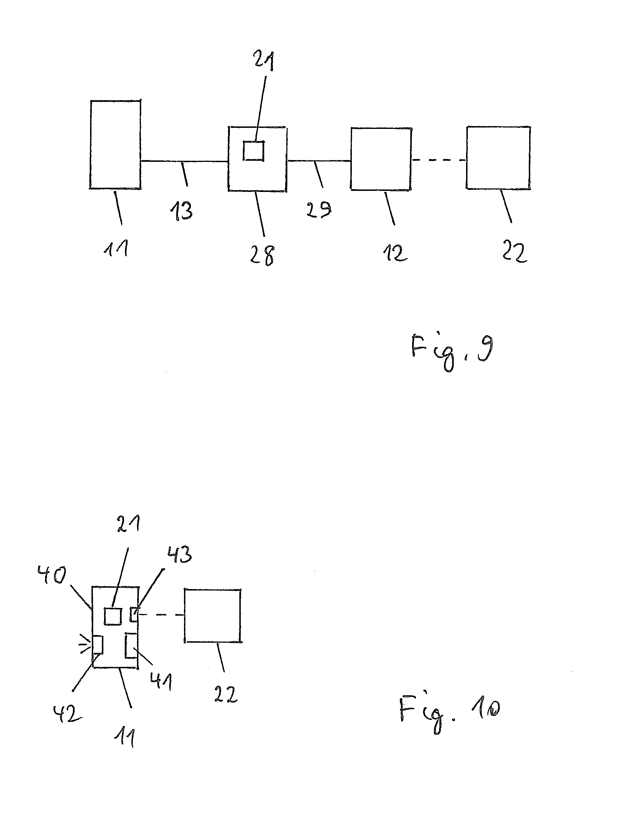

Other embodiments of the alerting arrangement are possible. For example can the sensor device 11 and the host device 12 be integrated into a single alerting unit 40, see Figure 10, such that the cable 13 can be dispensed with. In this embodiment, the alerting unit 40 preferably comprises the threshold means 21. The integrated alerting unit 40 preferably comprises an integrated power supply 41, like a battery; alternatively, the alerting unit 40 may be externally powered in particular via a cable. In one embodiment, the integrated alerting unit 40 may comprise an alerting means 42 like one or more high intensity LEDs. Alternatively or in addition, the integrated alerting unit 40 may comprise a radio transmitter 43 (alternatively a cable connection) for transmitting an alert signal to an external alerting device 22.

Other embodiments of the sensor device 11 or alerting unit 40 may comprise a cradle for putting the mobile phone in with the display oriented towards the photosensitive element 14. In such embodiments, the cradle forms the positioning means.

A further embodiment of the invention is shown in Figure 9. Here, the alerting arrangement comprises an adapter device 28 connected between the sensor device 11 and the host unit 12. The connection between the adapter device 28 and the host unit 12 may be a cable 29 or alternatively by a wireless/radio communication link. The adapter device 28 comprises the threshold means 21. This embodiment is particularly suited for applying the invention to existing host devices 12 where a threshold means 21 cannot be implemented.

It is possible that information is transferred from the electronic device 17 to the sensor device 11. For example, by modulating the light emitted from the light emitting alarm or notification element of an electronic device 17 it is possible to control the response of the sensor device 11, i.e., the signal sent or output by the sensor device 11. The modulation could be any one of frequency modulation (spectrum of the light), pulse width modulation PWM or luminous intensity modulation, without being limited to these possibilities.

## Claims

1. Sensor device (11) for an alerting system, comprising a casing (15) and a sensing element (14) adapted to detect an alerting event, wherein said sensor device (11) is adapted to output an alert signal in response to said sensing element (14) detecting an alerting event, **characterized in that** said sensing element is a photosensitive element (14) adapted to detect, when said sensor device (11) is positioned in a sensitive relationship to a light emitting alarm or notification element of an electronic device (17), an illumination of the light emitting alarm or notification element of said electronic device (17).

2. Sensor device as claimed in claim 1, wherein said sensor device (11) is designed to be self-raising when deflected from a vertical orientation.

3. Sensor device as claimed in any one of the preceding claims, comprising a weight (25) positioned in the lower area of said sensor device (11).

4. Sensor device as claimed in any one of the preceding claims, wherein a lower part (23) of the casing (15) of said sensor device (11) has a round side surface.

5. Sensor device as claimed in any one of the preceding claims, wherein said casing (15) comprises a planar bottom surface (18).

6. Sensor device as claimed in any one of the preceding claims, wherein said sensor device (11) comprises a positioning means (18; 27) for keeping said sensor device (11) in a sensitive relation to the light emitting alarm or notification element of said electronic device (17).

7. Sensor device as claimed in claim 6, wherein said positioning means comprises a foot element (18) defining a high-friction contact surface for a display of said electronic device (17).

8. Sensor device as claimed in claim 7, wherein said foot element (18) is made of an elastomer, in particular rubber.

9. Sensor device as claimed in claim 3 or claim 8, wherein said weight (25) and/or said foot element (18) is/are ring shaped.

10. Sensor device as claimed in claim 6, wherein said positioning means comprises a fastening means (27), in particular a suction means, for fastening said sensor device (11) on the light emitting alarm or notification element of said electronic device (17).

11. Alerting arrangement for deaf or hard of hearing people, comprising a sensor device (11) as claimed in any one of the preceding claims and a host device (12) connected to receive an alerting signal from said sensor device (11), wherein said host device (12) is adapted to cause an alerting measure for alerting a user.

12. Alerting arrangement as claimed in claim 11, comprising a threshold means (21) adapted to cause said alerting measure only if a signal from said photosensitive element (14) indicates an alert condition for a predetermined period of time.

13. Alerting arrangement as claimed in claim 11 or 12, wherein said predetermined period of time is at least one second, preferably at least 1.5 seconds, more preferably at least 2 seconds.

14. Alerting arrangement as claimed in any one of claims 11 to 13, wherein said threshold means (21) is arranged in said host unit (12).

15. Alerting arrangement as claimed in any one of claims 11 to 14, comprising an adapter device (28) connected between said sensor device (11) and said host unit (12) and being adapted to perform signal processing to signals received from said light sensitive element, and in particular comprising the threshold means (21) as claimed in claim 12.
